# EUROPÄISCHE PATENTSCHRIFT

(11) **EP 2 939 963 B1**
(45) Veröffentlichungstag und Bekanntmachung des Hinweises auf die Patenterteilung: **17.04.2019**
(21) Anmeldenummer: 15156453.1
(22) Anmeldetag: 25.02.2015
(51) Int. Cl.: B65G 57/22, B65G 47/64, B65G 47/71, B65G 57/24

(54) **ZUFUHRVORRICHTUNG FÜR DIE ZUFUHR VON GEFÜLLTEN SÄCKEN ZU EINER PALETTIERVORRICHTUNG**
FEEDING DEVICE FOR FEEDING FILLED BAGS TO A PALLETISING DEVICE
DISPOSITIF D'ALIMENTATION DESTINÉ À ALIMENTER EN SACS REMPLIS UN DISPOSITIF DE PALETTISATION

(30) Priorität: 28.04.2014 DE 102014105932
(43) Veröffentlichungstag der Anmeldung: 04.11.2015
(73) Patentinhaber: Windmöller & Hölscher KG, 49525 Lengerich (DE)
(72) Erfinder: Kölker, Martin, 49477 Ibbenbüren (DE); Ahlers, Ralf, 49525 Lengerich (DE)

(56) Entgegenhaltungen:
- FR-A1- 2 085 168
- US-A- 2 971 659
- US-A- 3 294 257
- US-A1- 2004 223 839

## Beschreibung

Die vorliegende Erfindung betrifft eine Zufuhrvorrichtung für die Zufuhr von gefüllten Säcken zu einer Palettiervorrichtung.

Es ist bekannt, dass für eine bessere Transportierbarkeit und ein besseres Handling gefüllte Säcke zu einem Sackstapel aufgestapelt werden können. Üblicherweise erfolgt dies auf einer Palette oder als palettenfreier Sackstapel für einen Weitertransport dieses Sackstapels. Hierfür ist es notwendig, die Säcke zu Reihen und zu Lagen auszubilden, wobei jede Lage später eine Schicht des Sackstapels ausbildet. Bekannte Palettiervorrichtungen weisen daher üblicherweise Schiebevorrichtungen auf, welche eine Schiebefläche zur Lagebildung aufweisen. Entscheidend ist nun, dass die gefüllten Säcke auf diese lagebildende Schiebefläche zugeführt werden können. Hierfür sind bei bekannten Palettiervorrichtungen Zufuhrvorrichtungen in Form von Förderbändern bekannt. Diese befördern die gefüllten Säcke auf die Schiebefläche der Schiebevorrichtung. Anschließend werden die Lagen häufig mit zwei oder mehr nebeneinander angeordneten Reihen der gefüllten Säcke ausgebildet, so dass ein Schieber die eingebrachte Reihe von Säcken eine weitere Position fortschiebt, um eine zweite Reihe von Säcken durch das Zufuhrband der Zufuhrvorrichtung einbringen zu können. Wie bereits ersichtlich ist, führt dies zu einem zeitlichen Nachteil, da für die Ausbildung einer Lage das Zufuhrband hintereinander die einzelnen Reihen in die Schiebevorrichtung einbringen muss. Dies führt darüber hinaus zu höherem Kostenaufwand, da eine Amortisation der gesamten Palettiervorrichtung langsamer aufgrund der langsameren Palettiergeschwindigkeit erfolgt.

Die US 2 971 659 zeigt eine Palettiervorrichtung für ein Stapeln von gefüllten Säcken zu einem Sackstapel, aufweisend eine Hubvorrichtung sowie eine Schiebevorrichtung mit einer Schiebefläche, einem Schiebetisch und einem Schieber zur Bewegung einer Lage gefüllter Säcke von der Schiebefläche auf den Schiebetisch, wobei für die Zufuhr der gefüllten Säcke eine Zufuhrvorrichtung für die Zufuhr von gefüllten Säcken zu der Palettiervorrichtung neben der Schiebevorrichtung angeordnet ist, aufweisend ein Haupt-Zufuhrförderer für die Zufuhr einer ersten Reihe der gefüllten Säcke auf die Schiebefläche der Palettiervorrichtung, wobei neben dem Haupt-Zufuhrförderer wenigstens ein Neben-Zufuhrförderer angeordnet ist für die Zufuhr einer weiteren Reihe der gefüllten Säcke auf die Schiebefläche neben der ersten Reihe der gefüllten Säcke, wobei zeitlich parallel zwei Reihen von gefüllten Säcken gleichzeitig oder im Wesentlichen gleichzeitig auf die Schiebefläche der Palettiervorrichtung zuführbar sind.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Gesamtgeschwindigkeit der Palettiervorrichtung zu verbessern.

Voranstehende Aufgabe wird gelöst durch eine Palettiervorrichtung mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Zufuhrvorrichtung beschrieben sind, selbstverständlich auch im Zusammenhang mit der erfindungsgemäßen Palettiervorrichtung und jeweils umgekehrt, so dass bezüglich der Offenbarung zu den einzelnen Erfindungsaspekten stets wechselseitig Bezug genommen wird bzw. werden kann.

Die erfindungsgemäße Zufuhrvorrichtung für die Zufuhr von gefüllten Säcken zu einer Palettiervorrichtung weist ein Haupt-Zufuhrband für die Zufuhr einer ersten Reihe der gefüllten Säcke auf eine Schiebefläche der Palettiervorrichtung auf. Erfindungsgemäß zeichnet sich die Zufuhrvorrichtung dadurch aus, dass neben dem Haupt-Zufuhrband wenigstens ein Neben-Zufuhrband angeordnet ist für die Zufuhr einer weiteren Reihe der gefüllten Säcke auf die Schiebefläche neben der ersten Reihe der gefüllten Säcke.

Erfindungsgemäß wird also die Zufuhrvorrichtung mit einem Neben-Zufuhrband aufgerüstet. Dies führt dazu, dass zeitlich parallel zwei Reihen von gefüllten Säcken gleichzeitig oder im Wesentlichen gleichzeitig auf die Schiebefläche der Palettiervorrichtung zugeführt werden. Während bei den bekannten Lösungen von Zufuhrvorrichtungen nach der Zufuhr einer ersten Reihe zuerst ein Schieber der Schiebevorrichtung diese erste Reihe in eine zweite Position schieben musste, bevor eine zweite Reihe durch das Zufuhrband zugeführt werden konnte, kann nun die Zufuhr von zwei Reihen in erfindungsgemäßer Weise parallel erfolgen. Dies führt sozusagen zu einer Halbierung der notwendigen Zeit, um die beiden Reihen einzubringen. Selbstverständlich sind auch zwei oder mehr Neben-Zufuhrbänder im Sinne der vorliegenden Erfindung denkbar. Insbesondere orientiert sich die Anzahl der Neben-Zufuhrbänder an der Anzahl der maximalen Reihen, welche in einem Lagebild auf der Schiebefläche ausgebildet werden können. Es ist also bevorzugt, dass die Summe aus Haupt-Zufuhrband und aller Neben-Zufuhrbänder der Anzahl der maximalen Reihen in einer Lage für den Sackstapel entspricht.

Erfindungsgemäß kann dabei das Neben-Zufuhrband komplett unabhängig vom Haupt-Zufuhrband ausgebildet sein. So kann z. B. eine eigene Kontrollvorrichtung und/oder eine eigene Antriebsvorrichtung vorgesehen sein, um das Neben-Zufuhrband für die Zufuhr der weiteren Reihe der gefüllten Säcke zu betreiben.

Die Schiebefläche, auf welcher das Lagebild erzeugt wird, wird sozusagen automatisch gleichzeitig befüllt, so dass auch die Lageausbildung mit doppelter Geschwindigkeit erfolgen kann. Ein entsprechendes Zufuhrband, sowohl als Haupt-Zufuhrband als auch als Neben-Zufuhrband, ist vorzugsweise als Förderband ausgebildet. Jedoch sind grundsätzlich auch andere Fördermöglichkeiten, z. B. eine Gleitförderung mithilfe von Luftdruckdüsen oder Schiebern, im Sinne der vorliegenden Erfindung denkbar.

Erfindungsgemäß unterscheiden sich Haupt-Zufuhrband und Neben-Zufuhrband auch durch die geometrischen Abmessungen voneinander. Erfindungsgemäß handelt es sich dabei um eine unterschiedliche Breite bezogen auf Haupt-Zufuhrband und Neben-Zufuhrband. Dabei wird das Haupt-Zufuhrband bei jeder Palettieraufgabe eingesetzt. Das Neben-Zufuhrband wird dann als optional zuschaltbares Zufuhrband angesehen, welches bei Palettieraufgaben eingesetzt wird, die sich mit kleineren oder schmäleren gefüllten Säcken beschäftigen. Dies führt dazu, dass eine erfindungsgemäße Zufuhrvorrichtung flexibel für sämtliche Palettieraufgaben einsetzbar ist. Insbesondere können auch klassische Palettieraufgaben mit einem einzigen Zufuhrband durch die separate Ausbildung des Haupt-Zufuhrbandes bearbeitet werden.

Je nach tatsächlicher Palettieraufgabe können die Antriebsvorrichtungen für die einzelnen Zufuhrbänder auch für unterschiedliche Geschwindigkeiten vorgesehen sein. So sind bspw. unterschiedliche Getriebe oder unterschiedliche Leistungsstärken für die einzelnen Antriebsvorrichtungen im Sinne der vorliegenden Erfindung für das Haupt-Zufuhrband und die Neben-Zufuhrbänder denkbar.

Für das Ausbilden einer Lage ist ein Lagebild vorgesehen, welches eine entsprechende Anordnung der einzelnen gefüllten Säcke relativ zueinander beinhaltet. Dieses Lagebild wird auf der Schiebefläche ausgebildet. Dabei ist vorzugsweise der Zufuhrvorrichtung vorgelagert eine später noch näher erläuterte Drehvorrichtung vorgesehen, welche bereits die Zufuhrbänder mit entsprechend für das zu erzielende Lagebild ausgerichteten gefüllten Säcken befüllt. Anschließend werden die Zufuhrbänder bereits entsprechend auf das Lagebild ausgerichteten Säcken betrieben, um diese ausgerichteten Säcke als Lagebild auf die Schiebefläche zu befördern.

Die Schiebevorrichtung und insbesondere die Schiebefläche der Palettiervorrichtung dient nun dazu, nach Ausbildung der Lage mithilfe eines Schiebers diese Lage der gefüllten Säcke auf einen neben der Schiebefläche angeordneten Schiebetisch zu schieben. Dieser Schiebetisch ist vorzugsweise oberhalb einer Hubvorrichtung angeordnet, so dass durch ein Öffnen des Schiebetisches, z. B. durch ein Auseinanderfahren einzelner Schiebetischplatten, ein Absetzen der ausgebildeten und verschobenen Lagen auf der Hubvorrichtung erfolgen kann. Dabei kann dies direkt auf der Hubvorrichtung oder separat auf einer Palette, welche auf der Hubvorrichtung angeordnet ist, erfolgen. Anschließend bewegt sich die Hubvorrichtung mit der abgesetzten Lage der gefüllten Säcke nach unten, so dass sich der Schiebetisch wieder schließen kann, um die nachfolgende nächste Lage aufnehmen zu können. Dies wird solange durchgeführt, bis der sich ausbildende Sackstapel die gewünschte finale Höhe aufweist.

Neben dem grundsätzlichen Vorteil der Erhöhung der Gesamtgeschwindigkeit der Palettierung kann eine erfindungsgemäße Zufuhrvorrichtung auch nachgerüstet werden. So ist es bspw. denkbar, wenigstens ein Neben-Zufuhrband einem entsprechend bekannten und bereits bestehenden ersten Haupt-Zufuhrband zuzubauen, so dass damit auch die erfindungsgemäße Qualität bei bereits bestehenden Palettiervorrichtungen erzielbar wird.

Erfindungsgemäß ist von Vorteil, wenn bei einer erfindungsgemäßen Zufuhrvorrichtung das Haupt-Zufuhrband und/oder das wenigstens eine Neben-Zufuhrband als Förderband ausgebildet ist. Insbesondere handelt es sich dabei um ein aktiv angetriebenes Förderband für das Haupt-Zufuhrband und das wenigstens eine Neben-Zufuhrband. So kann bspw. eine Antriebsvorrichtung in Form eines Elektromotors und/oder eines Frequenzumrichters eingesetzt werden, um eine aktive Antriebskraft auf das Haupt-Zufuhrband und/oder das Neben-Zufuhrband einbringen zu können. Jedoch sind selbstverständlich auch grundsätzlich Rollenlagerungen denkbar. Auch Rollen, welche ein darauf gelagertes Förderband stützen, sind im Sinne der vorliegenden Erfindung für die Zufuhrbänder einsetzbar. Selbstverständlich ist jedoch auch die Kombination mit anderen Zufuhrbändern, wie z. B. eine aktive oder passive Luftkissenförderung, im Sinne der vorliegenden Erfindung möglich. Ein weiterer Vorteil ist erzielbar, wenn bei einer erfindungsgemäßen Zufuhrvorrichtung das Haupt-Zufuhrband und das wenigstens eine Neben-Zufuhrband parallele oder im Wesentlichen parallele Förderrichtungen aufweisen. So können grundsätzlich Haupt-Zufuhrband und Neben-Zufuhrband frei an der Palettiervorrichtung angeordnet sein. Bspw. ist es möglich, dass das Haupt-Zufuhrband von einer anderen Seite die Zufuhr der gefüllten Säcke zur Verfügung stellt, als dies für das Neben-Zufuhrband der Fall ist. Bevorzugt ist jedoch, wenn die einzelnen Förderrichtungen parallel oder im Wesentlichen parallel zueinander ausgerichtet sind. Dies führt dazu, dass auch bei der Zufuhr der gefüllten Säcke die einzelnen zugeführten Reihen der gefüllten Säcke parallel oder im Wesentlichen parallel auf der Schiebefläche zum Liegen kommen. Unter der Förderrichtung ist dabei die Zufuhrrichtung zu verstehen, also die Richtung, mit welcher die gefüllten Säcke das jeweilige Zufuhrband auf die Schiebefläche hinaus verlassen. Die einzelnen Zufuhrbänder selbst können dabei selbstverständlich Krümmungen aufweisen, um zu dieser Zufuhrposition hinzuführen. Die parallele Ausrichtung ist insbesondere ausgebildet für eine benachbarte Anordnung von Haupt-Zufuhrband und Neben-Zufuhrband, also eine Anordnung der beiden Zufuhrbänder direkt nebeneinander auf einer gemeinsamen Seite der Palettiervorrichtung. Für diese automatische Ausbildung des Lagebildes mit den unterschiedlichen Reihen wird hier eine besonders platzsparende Ausführungsform vorgegeben.

Ein Vorteil der Erfindung ist, wenn bei einer erfindungsgemäßen Zufuhrvorrichtung das Neben-Zufuhrband eine geringere Breite aufweist als das Hauptzufuhrband. Wie bereits mehrfach erläutert worden ist, ist das Neben-Zufuhrband als separat zuschaltbares Neben-Zufuhrband für besondere Palettieraufgaben eingesetzt. Das Haupt-Zufuhrband ist dagegen bei jeder Palettieraufgabe im Einsatz. Die Reduktion der Breite des Neben-Zufuhrbandes führt in einem ersten Schritt zu einer Reduktion des Platzbedarfs der erfindungsgemäßen Zufuhrvorrichtung. Gleichzeitig reduziert sich auch der notwendige Materialaufwand, das entsprechende Gewicht und die Gesamtkomplexität der Zufuhrvorrichtung. Da üblicherweise komplexere Palettieraufgaben mit kleineren gefüllten Säcken einhergehen, und insbesondere bei solchen komplexeren Palettieraufgaben die Geschwindigkeit zu beachten ist, kann die Breite des Neben-Zufuhrbandes an solche kleineren gefüllten Säcke angepasst sein. Größere Säcke werden mit einer üblicherweise geringeren Palettiergeschwindigkeit bearbeitet, so dass hier das Haupt-Zufuhrband als alleinige Zufuhr ausreicht. Somit kann flexibel für die jeweils notwendige Palettieraufgabe, insbesondere in Abhängigkeit der jeweiligen tatsächlichen Größe der gefüllten Säcke, die Anzahl der betriebenen Zufuhrbänder frei und flexibel ausgebildet werden. Selbstverständlich können auch zwei oder mehr Zufuhrbänder vorgesehen sein, welche alle unterschiedlich große Breiten aufweisen. So können bspw. ein zweites und ein drittes Neben-Zufuhrband vorgesehen sein, welche immer kleinere Breiten bezogen auf das Haupt-Zufuhrband und auf das benachbarte Neben-Zufuhrband aufweisen. Damit wird darüber hinaus der notwendige Schiebeweg des Schiebers auf der Schiebefläche zusätzlich reduziert, so dass auch bei einer reinen Verwendung des Haupt-Zufuhrbandes alleine ein unnötiger langer Schiebeweg mit damit einhergehender unnötiger langer Schiebezeit vermieden oder zumindest reduziert werden kann.

Vorteilhaft ist es darüber hinaus, wenn bei einer erfindungsgemäßen Zufuhrvorrichtung das Neben-Zufuhrband eine Antriebsvorrichtung aufweist, für einen schnelleren Antrieb als eine Antriebsvorrichtung des Haupt-Zufuhrbandes. Insbesondere kann das Neben-Zufuhrband auf diese Weise die entsprechende Reihenausrichtung der Säcke berücksichtigen. Dabei wird vorzugsweise auf dem Neben-Zufuhrband bereits die komplette Reihe der Lage angeordnet, so dass in einem einzigen schnellen Antrieb diese gesamte Reihe, also zwei oder mehr Säcke, auf die Schiebefläche zugeführt werden kann. Die Ausbildung für einen schnelleren Antrieb kann dabei mit einem entsprechend schneller drehenden Elektromotor oder aber durch ein entsprechendes Getriebe gewählt werden. Selbstverständlich kann auch eine gemeinsame Antriebsvorrichtung mit entsprechenden zwei Abtrieben und zugehörigen Getrieben diese Ausführungsform der vorliegenden Erfindung zur Verfügung stellen.

Vorteilhaft ist es weiter, wenn bei einer erfindungsgemäßen Zufuhrvorrichtung das Haupt-Zufuhrband und das wenigstens eine Neben-Zufuhrband, für die Zufuhr gefüllter Säcke aus wenigstens einem der folgenden Materialien ausgebildet sind:
- Papier
- Gewebe
- Folie
- Vlies

Bei der voranstehenden Aufzählung handelt es sich um eine nicht abschließende Liste. Selbstverständlich können die einzelnen beschriebenen Materialien untereinander oder auch mit nicht näher erläuterten Materialien kombiniert werden. Bspw. können die einzelnen Zufuhrbänder bzw. deren Beschichtungen oder Aufsätze angepasst werden, um eine besonders schonende Transportmöglichkeit für die gefüllten Säcke zu gewährleisten. Auch ist es denkbar, dass solche Aufsätze oder Einsätze auswechselbar ausgebildet sind, um eine flexible Anpassung der einzelnen Zufuhrbänder zur Verfügung stellen zu können. Neben einer Schonung der Materialien der Säcke kann jedoch auch eine verbesserte Förderqualität, z. B. mit einer erhöhten Reibung für das entsprechende Material, ein Ziel der Auswahl für die Anpassung sein. Insbesondere wird eine möglichst universelle Materialpaarung zur Verfügung gestellt, so dass das Haupt-Zufuhrband und das Neben-Zufuhrband für eine möglichst breite Auswahl unterschiedlicher Materialien der gefüllten Säcke eingesetzt werden können.

Erfindungsgemäß ist eine Palettiervorrichtung für ein Stapeln von gefüllten Säcken zu einem Sackstapel vorgesehen, aufweisend eine Hubvorrichtung sowie eine Schiebevorrichtung mit einer Schiebefläche, einem Schiebetisch und einem Schieber zur Bewegung einer Lage gefüllter Säcke von der Schiebefläche auf den Schiebetisch. Eine erfindungsgemäße Palettiervorrichtung zeichnet sich dadurch aus, dass für die Zufuhr der gefüllten Säcke eine Zufuhrvorrichtung gemäß der vorliegenden Erfindung neben der Schiebevorrichtung angeordnet ist. Damit bringt eine erfindungsgemäße Palettiervorrichtung die gleichen Vorteile mit sich, wie sie ausführlich mit Bezug auf eine erfindungsgemäße Zufuhrvorrichtung erläutert worden sind. Die Hubvorrichtung kann dabei vorzugsweise motorisch auf und ab gefahren werden, so dass ein entsprechendes schichtweises bzw. lageweises Aufstapeln der einzelnen Lagen der gefüllten Säcke erfolgen kann. Selbstverständlich kann die Palettierung auf einer temporären Palette, einer Transportpalette oder sogar palettenfrei direkt auf der Hubvorrichtung erfolgen. Insbesondere können Aussparungen für ein Anheben mit einer Zinkengabel eines Gabelstaplers vorgesehen werden, welche sich direkt innerhalb einer Lage der Säcke angeordnet befinden. Die Zufuhr der gefüllten Säcke erfolgt dabei in beschriebener Weise direkt auf die Schiebefläche.

Eine erfindungsgemäße Palettiervorrichtung lässt sich dahingehend weiterbilden, dass das Neben-Zufuhrband der Zufuhrvorrichtung in Richtung einer Schieberichtung der Schiebevorrichtung versetzt neben dem Haupt-Zufuhrband angeordnet ist. Insbesondere ist also das Haupt-Zufuhrband das Eingangs-Zufuhrband, welches die entsprechende Sackreihe direkt am Rand des Schiebers in die Schiebevorrichtung einbringt. Dieser Reihe nachgeordnet in Schieberichtung ist dementsprechend das Neben-Zufuhrband vorgesehen, so dass sich der Schiebeweg des Schiebers reduziert, wenn nur das Haupt-Zufuhrband eingesetzt werden soll. Dies führt für solche Palettieraufgaben zu einer reduzierten Zeitsituation für die Durchführung des Palettiervorgangs.

Vorteilhaft ist es ebenfalls, wenn bei einer erfindungsgemäßen Palettiervorrichtung der Zufuhrvorrichtung vorgelagert eine Drehvorrichtung für ein Drehen der gefüllten Säcke angeordnet ist. Dabei können unterschiedlichste Mechanismen für die Drehvorrichtung eingesetzt werden, wie sie später noch erläutert werden. Insbesondere kann auf diese Weise ein erwünschtes Lagebild auf der Schiebefläche durch die Drehvorrichtung vorbereitet werden. Aus der Drehvorrichtung erhalten die einzelnen Zufuhrbänder nun die Säcke bereits mit der entsprechenden Ausrichtung, so dass mit der richtigen Ausrichtung die einzelnen gefüllten Säcke oder bereits die Gesamtreihe der Säcke auf die Schiebefläche zugeführt werden können. Dementsprechend kann auch eine Fördervorrichtung innerhalb der Drehvorrichtung vorgesehen sein, um die Drehung durchführen zu können. Die Drehvorrichtung ist dabei vorzugsweise für jedes Zufuhrband separat oder gemeinsam für alle Zufuhrbänder vorgesehen. Der Drehvorrichtung vorgelagert kann dabei eine Herstellvorrichtung vorgesehen sein, aus welcher die gefüllten Säcke heraustreten. Dabei handelt es sich insbesondere um eine Sackfüllmaschine, z. B. eine sogenannte Form-Filland-Seal-Maschine.

Eine Palettiervorrichtung, welche eine entsprechende Drehvorrichtung nach dem voranstehenden Absatz aufweist, lässt sich dadurch weiterbilden, dass diese Drehvorrichtung wenigstens eines der folgenden Drehmittel aufweist:
- Greifarm
- Luftdruckdüsen
- Drehbänder mit unterschiedlichen Geschwindigkeiten
- Schieber

Bei der voranstehenden Aufzählung handelt es sich um eine nicht abschließende Liste. Selbstverständlich können in einer Drehvorrichtung auch unterschiedliche Formen des Drehens miteinander frei kombiniert sein. Ein Drehen mithilfe eines Greifarms erfolgt durch aktive geometrische Korrelation und damit ein Kontaktieren mit dem Greifarm für den jeweiligen Sack. Luftdruckdüsen können bei leichten Säcken eine entsprechende Veränderung der Orientierung des Sackes durchführen. Auch können einzelne Förderbänder parallel nebeneinander mit unterschiedlichen Geschwindigkeiten betrieben werden, um eine entsprechende Drehung der Säcke gewährleisten zu können. Auch ein seitliches Eingreifen durch Schieber kann zur erfindungsgemäßen Lösung dieser Rotationsaufgabe führen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines Sackstapels, welcher mit einer erfindungsgemäßen Palettiervorrichtung erzeugt wird,
- Fig. 2: in der Draufsicht eine erfindungsgemäße Zufuhrvorrichtung in einer erfindungsgemäßen Palettiervorrichtung und
- Fig. 3: die Ausführungsform der Fig. 2 nach dem Schiebevorgang.

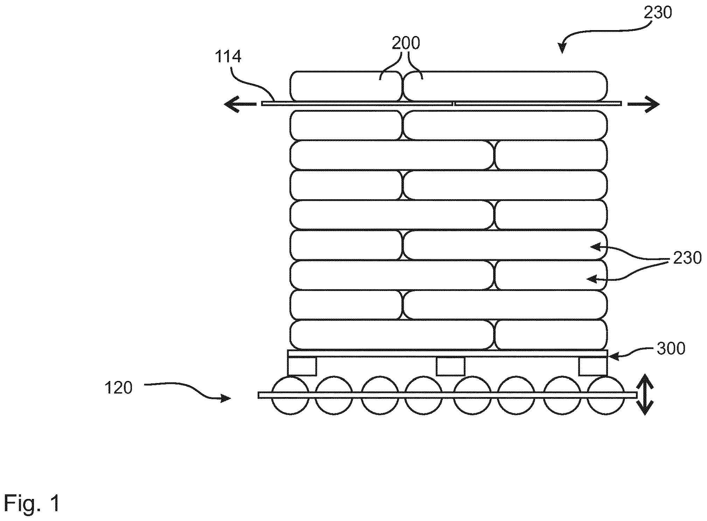

Fig. 1 zeigt schematisch in einer Seitenansicht, wie ein Sackstapel erzeugt werden soll. Dieser Sackstapel weist eine Vielzahl unterschiedlicher Lagen 230 auf, welche hier zum Sackstapel auf der Palette 300 aufgestapelt werden. Die Palette 300 ist auf einer Hubvorrichtung 120 angeordnet, welche, wie der Doppelpfeil darstellt, nach oben und nach unten bewegbar ist. Die Darstellung gemäß der Fig. 1 zeigt einen bereits fortgeschrittenen Stapelvorgang. Die erste Lage wird dabei in einer Art und Weise aufgebracht, dass die Hubvorrichtung 120 sich direkt unter dem Schiebetisch 114 befindet. Zu diesem Zeitpunkt ist auf dem Schiebetisch 114 bereits eine Lage 230 der gefüllten Säcke 200 angeordnet, wie dies auch die Fig. 1 zeigt. Öffnet sich nun der Schiebetisch 114, so fällt die gesamte Lage 230 eine kurze Strecke auf die Hubvorrichtung 120 bzw. auf die dort angeordnete Palette 300. Anschließend wird die Hubvorrichtung 120 zusammen mit der Palette 300 und der auf der Palette angeordneten Lage 230 soweit nach unten bewegt, dass der Schiebetisch 114 sich wieder schließen und die nachfolgende Lage 230 durch den Schieber 116 aufnehmen kann. Diese Schritte werden solange wiederholt, bis die erwünschte Stapelhöhe erreicht ist und sämtliche Lagen 230 auf der Palette 300 angeordnet worden sind.

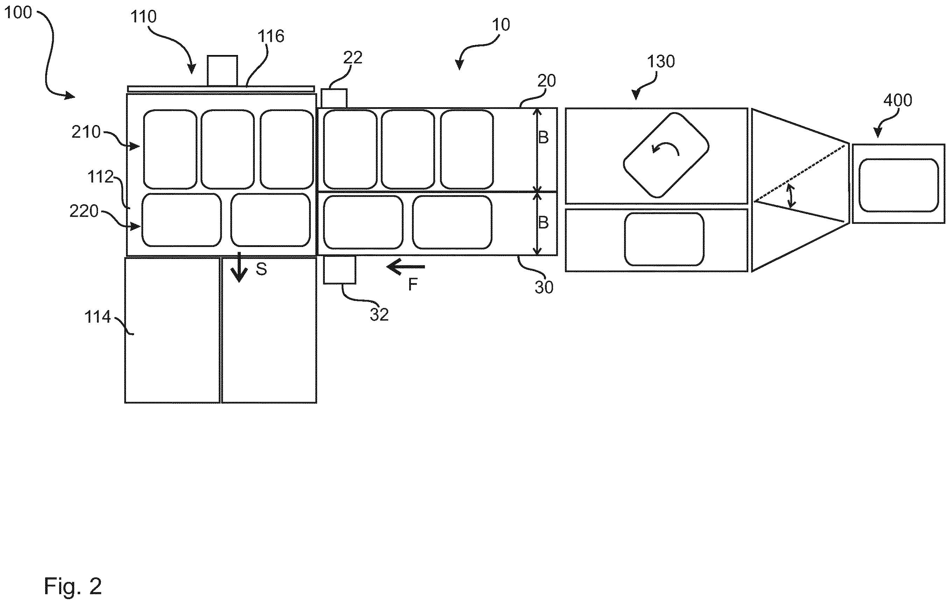

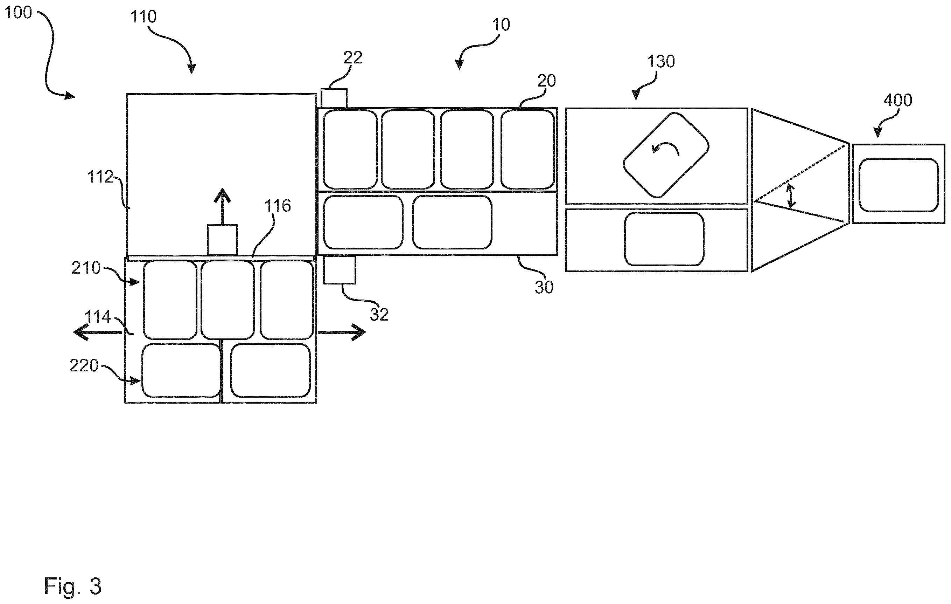

Die Fig. 2 und 3 zeigen den Palettiervorgang in der Draufsicht. Dabei ist eine Herstellvorrichtung 400 vorgesehen, welche z. B. als sogenannte Form-Fill-and-Seal-Maschine, das Füllen und Herstellen der gefüllten Säcke 200 durchführt. Nachfolgend ist schematisch eine Weiche dargestellt, welche die Säcke 200 einer Drehvorrichtung 130 mit unterschiedlichen Drehpositionen zuführt. Hier ist gut zu erkennen, dass die obere Drehposition für eine 90°-Rotation der Säcke 200 ausgebildet ist, während auf der Unterseite keine oder nur eine leichte Rotation der Säcke 200 durchgeführt wird. Nachfolgend ist eine Ausführungsform einer erfindungsgemäßen Zufuhrvorrichtung 10 angeordnet. Diese ist mit einem Haupt-Zufuhrband 20 und einem Neben-Zufuhrband 30 ausgestattet. Die Breite B des Haupt-Zufuhrbandes 20 ist dabei größer als die Breite B des Neben-Zufuhrbandes 30. Dies rührt aus unterschiedlichen Palettieraufgaben her. Die Ausführungsform und die Situation gemäß der Fig. 2 und 3 zeigt kleinere Säcke, bei welcher mit hoher Geschwindigkeit beide Zufuhrbänder 20 und 30 im Einsatz sind. Somit werden beide Reihen 210 und 220 der gefüllten Säcke zeitlich gleichzeitig oder im Wesentlichen gleichzeitig auf die Schiebefläche 112 der Schiebevorrichtung zugeführt. Anschließend kann der Schieber 160 die Schiebebewegung durchführen und damit die gesamte Lage 230 aus den beiden Reihen 210 und 220 der gefüllten Säcke 200 auf den Schiebetisch 114 durchführen. Befindet sich die Lage 230 auf dem Schiebetisch 114, so erfolgt ein Öffnen, wie dies bereits mit Bezug auf die Fig. 1 erläutert worden ist.

Ebenfalls gut zu erkennen ist eine separate Antriebsmöglichkeit, mit einer Antriebsvorrichtung 22 für das Haupt-Zufuhrband 20 und eine Antriebsvorrichtung 32 für das Neben-Zufuhrband 30. Während bei komplexen und möglichst schnell laufenden Palettieraufgaben die Konfiguration gewählt wird, wie sie die Fig. 2 und 3 zeigen, können bei besonders großen Säcken und dementsprechend auch langwierigeren Palettieraufgaben eine Reduktion der Zufuhrbänder durchgeführt werden. Insbesondere wird dann nur noch das Haupt-Zufuhrband 20 betrieben, und das Neben-Zufuhrband 30 stillgelegt. Dies zeigt einmal mehr die hohe Flexibilität in den Einsatzmöglichkeiten für eine erfindungsgemäße Zufuhrvorrichtung 10.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Zufuhrvorrichtung
- 20: Haupt-Zufuhrband
- 22: Antriebsvorrichtung
- 30: Neben-Zufuhrband
- 32: Antriebsvorrichtung

- 100: Palettiervorrichtung
- 110: Schiebevorrichtung
- 112: Schiebefläche
- 114: Schiebetisch
- 116: Schieber
- 120: Hubvorrichtung
- 130: Drehvorrichtung

- 200: gefüllter Sack
- 210: erste Reihe
- 220: weitere Reihe
- 230: Lage

- 300: Palette
- 400: Herstellvorrichtung

- F: Förderrichtung
- B: Breite
- S: Schieberichtung

## Patentansprüche

1. Palettiervorrichtung (100) für ein Stapeln von gefüllten Säcken (200) zu einem Sackstapel, aufweisend eine Hubvorrichtung (120) sowie eine Schiebevorrichtung (110) mit einer Schiebefläche (112), einem Schiebetisch (114) und einem Schieber (116) zur Bewegung einer Lage (230) gefüllter Säcke (200) von der Schiebefläche (112) auf den Schiebetisch (114),
wobei für die Zufuhr der gefüllten Säcke (200) eine
Zufuhrvorrichtung (10) für die Zufuhr von gefüllten Säcken (200) zu der Palettiervorrichtung (100) neben der Schiebevorrichtung (110) angeordnet ist, aufweisend ein Haupt-Zufuhrband (20) für die Zufuhr einer ersten Reihe (210) der gefüllten Säcke (200) auf die Schiebefläche (112) der Palettiervorrichtung (100), wobei
neben dem Haupt-Zufuhrband (20) wenigstens ein Neben-Zufuhrband (30) angeordnet ist für die Zufuhr einer weiteren Reihe (220) der gefüllten Säcke (200) auf die Schiebefläche (112) neben der ersten Reihe (210) der gefüllten Säcke (200), wobei
zeitlich parallel zwei Reihen von gefüllten Säcken (200) gleichzeitig oder im Wesentlichen gleichzeitig auf die Schiebefläche (112) der Palettiervorrichtung (100) zuführbar sind, und
das Neben-Zufuhrband (30) eine geringere Breite (B) aufweist als das Haupt-Zufuhrband (20), das Haupt-Zufuhrband (20) bei jeder Palettieraufgabe eingesetzt wird und das Nebenzufuhrband (30) optional zuschaltbar ist und bei Palettieraufgaben eingesetzt wird, die sich mit kleineren oder schmäleren gefüllten Säcken (200) beschäftigen,
wobei das Haupt-Zufuhrband (20) und/oder das wenigstens eine Neben-Zufuhrband (30) als Förderband ausgebildet ist.

2. Palettiervorrichtung (100) nach Anspruch 1,
**dadurch gekennzeichnet, dass**
das Neben-Zufuhrband (30) der Zufuhrvorrichtung (10) in Richtung einer Schieberichtung (S) der Schiebevorrichtung (110) versetzt neben dem Haupt-Zufuhrband (20) angeordnet ist.

3. Palettiervorrichtung (100) nach einem der Ansprüche 1 oder 2,
**dadurch gekennzeichnet, dass**
der Zufuhrvorrichtung (10) vorgelagert eine Drehvorrichtung (130) für ein Drehen der gefüllten Säcke (200) angeordnet ist.

4. Palettiervorrichtung (100) nach Anspruch 3,
**dadurch gekennzeichnet, dass**
die Drehvorrichtung (130) wenigstens eines der folgenden Drehmittel aufweist:
- Greifarm
- Luftdruckdüsen
- Drehbänder mit unterschiedlichen Geschwindigkeiten
- Schieber

5. Palettiervorrichtung (100) nach einem der vorangegangenen Ansprüche,
**dadurch gekennzeichnet, dass**
das Haupt-Zufuhrband (20) und das wenigstens eine Neben-Zufuhrband (30) parallele oder im Wesentlichen parallele Förderrichtungen (F) aufweisen.

6. Palettiervorrichtung (100) nach einem der vorangegangenen Ansprüche,
**dadurch gekennzeichnet, dass**
das Neben-Zufuhrband (30) eine Antriebsvorrichtung (32) aufweist für einen schnelleren Antrieb als eine Antriebsvorrichtung (22) des Haupt-Zufuhrbandes (20).

7. Palettiervorrichtung (100) nach einem der vorangegangenen Ansprüche,
**dadurch gekennzeichnet, dass**
das Haupt-Zufuhrband (20) und das wenigstens eine Neben-Zufuhrband (30) ausgebildet sind für die Zufuhr gefüllter Säcke (200) aus wenigstens einem der folgenden Materialien:
- Papier
- Gewebe
- Folie
- Vlies

## Claims

1. A palletizing device (100) for a stack of filled bags (200) to form a stack of bags, having a lifting device (120) as well as a sliding device (110) with a sliding surface (112), a sliding table (114) and a slide (116) for moving a layer (230) of filled bags (200) from the sliding surface (112) onto the sliding table (114),
wherein for the feed of the filled bags (200) a feed device (10) for the feed of filled bags (200) to the palletizing device (100) is arranged next to the sliding device (110), having a main feed belt (20) for the feed of a first row (210) of filled bags (200) onto the sliding surface (112) of the palletizing device (100),
wherein
next to the main feed belt (20) at least one secondary feed belt (30) is arranged for the feed of a further row (220) of filled bags (200) onto the sliding surface (112) next to the first row (210) of filled bags (200), wherein
two rows of filled bags (200) can be fed parallel in time simultaneously or substantially simultaneously onto the sliding surface (112) of the palletizing device (100), and
the secondary feed belt (30) has a smaller width (B) than the main feed belt (20), the main feed belt (30) is used for every palletizing task and the secondary feed belt (30) can be optionally switched on and be used for palletizing tasks, which deal with smaller or narrower filled bags (200),
wherein the main feed belt (20) and/or the at least one secondary feed belt (30) is designed as a conveyor belt.

2. A palletizing device (100) according to Claim 1,
**characterized in that**
the secondary feed belt (30) of the feed device (10) is arranged next to the main feed belt (30) offset in the direction of the sliding direction (S) of the sliding device (110).

3. A palletizing device (100) according to any one of Claims 1 or 2,
**characterized in that**
a rotary device (130) for a rotation of the filled bags (200) is arranged upstream of the feed device (10).

4. A palletizing device (100) according to Claim 3,
**characterized in that**
the rotary device (130) has at least one of the following rotating means:
- gripper arm
- air pressure nozzles
- rotating belts with different speeds
- slide

5. A palletizing device (100) according to any one of the preceding claims,
**characterized in that**
the main feed belt (20) and the at least one secondary feed belt (30) have parallel or substantially parallel conveying directions (F).

6. A palletizing device (100) according to any one of the preceding claims,
**characterized in that**
the secondary feed belt (30) has a drive device (32) for a more rapid drive than a drive device (22) of the main feed belt (20).

7. A palletizing device (100) according to any one of the preceding claims,
**characterized in that**
the main feed belt (20) and the at least one secondary feed belt (30) are designed for the feed of filled bags (200) made of at least one of the following materials:
- paper
- fabric
- film
- non-woven

## Revendications

1. Dispositif de palettisation (100) pour une pile de sacs remplis (200) en une pile de sacs, comprenant un dispositif de levage (120) ainsi qu'un dispositif de poussée (110) avec une surface de poussée (112), une table de poussée (114) et un poussoir (116) pour le déplacement d'une couche (230) de sacs remplis (200) de la surface de poussée (112) vers la table de poussée (114),
moyennant quoi, pour l'alimentation en sacs remplis (200), un
dispositif d'alimentation (10) est disposé à proximité du dispositif de poussée (110) pour l'alimentation du dispositif de palettisation (100) en sacs remplis (200), comprenant une bande d'alimentation principale (20) pour l'introduction d'une première rangée (210) de sacs remplis (200) sur la surface de poussée (112) du dispositif de palettisation (100), moyennant quoi,
à proximité de la bande d'alimentation principale (20) est disposée au moins une bande d'alimentation secondaire (30) pour l'introduction d'une autre rangée (220) de sacs remplis (200) sur la surface de poussée (112) à proximité de la première rangée (210) de sacs remplis (200),
deux rangées de sacs remplis (200) pouvant être introduites parallèlement de manière simultanée ou globalement simultanée sur la surface de poussée (112) du dispositif de palettisation (100) et
la bande d'alimentation secondaire (20) présentant une largeur (B) inférieure à celle de la bande d'alimentation principale (20), la bande d'alimentation principale (20) étant utilisée à chaque tâche de palettisation et la bande d'alimentation secondaire (30) pouvant être commutée en option et utilisée lors de tâches de palettisation qui concernent des sacs remplis (200) plus petits ou plus étroits,
la bande d'alimentation principale (20) et/ou l'au moins une bande d'alimentation secondaire (30) étant conçues comme des bandes de convoyage.

2. Dispositif de palettisation (100) selon la revendication 1,
**caractérisé en ce que**
la bande d'alimentation secondaire (30) du dispositif d'alimentation (10) est disposée à proximité de la bande d'alimentation principale (20) de manière décalée en direction d'une direction de poussée (S) du dispositif de poussée (110).

3. Dispositif de palettisation (100) selon l'une des revendications 1 ou 2,
**caractérisé en ce que**
en amont du dispositif d'alimentation (10) est disposé un dispositif de rotation (130) pour une rotation des sacs remplis (200).

4. Dispositif de palettisation (100) selon la revendication 3,
**caractérisé en ce que**
le dispositif de rotation (130) comprend au moins un des moyens de rotation suivants :
- bras de préhension
- buses d'air comprimé
- bandes rotatives avec différentes vitesses
- poussoir

5. Dispositif de palettisation (100) selon l'une des revendications précédentes,
**caractérisé en ce que**
la bande d'alimentation principale (20) et l'au moins une bande d'alimentation secondaire (30) présentent des directions de convoyage (F) parallèles ou globalement parallèles.

6. Dispositif de palettisation (100) selon l'une des revendications précédentes,
**caractérisé en ce que**
la bande d'alimentation secondaire (30) comprend un dispositif d'entraînement (32) pour un entraînement plus rapide qu'un dispositif d'entraînement (22) de la bande d'alimentation principale (20).

7. Dispositif de palettisation (100) selon l'une des revendications précédentes,
**caractérisé en ce que**
la bande d'alimentation principale (20) et l'au moins une bande d'alimentation secondaire (30) sont conçus pour l'alimentation en sacs remplis (200) constitués d'au moins un des matériaux suivants :
- papier
- tissu
- film
- non-tissé
